(19) Europäisches Patentamt
European Patent Office
Office européen des brevets

(11) **EP 3 026 811 A1**

(12) **EUROPÄISCHE PATENTANMELDUNG**

(43) Veröffentlichungstag:
01.06.2016  Patentblatt 2016/22

(51) Int Cl.:
*H02P 21/14* *(2006.01)*

(21) Anmeldenummer: **14465525.5**

(22) Anmeldetag: **26.11.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Continental Teves AG & Co. oHG 60488 Frankfurt (DE)**

(72) Erfinder:
• **Kaufmann, Tom**
**55566 Ippenschied (DE)**
• **Budianu, Bogdan**
**61440 Oberursel (DE)**
• **Pohoata, Andrei**
**700230 Iasi (RO)**
• **Schulte, Dominik**
**64367 Mühltal (DE)**

(54) **Verfahren zum Ermitteln eines Winkelfehlers in einer elektronisch kommutierten Synchronmaschine, Vorrichtung und Kraftfahrzeugsystem**

(57) Die Erfindung beschreibt ein Verfahren zum Ermitteln eines Winkelfehlers ($\varphi$) in einer elektronisch kommutierten Synchronmaschine (2) mit einem Stator (4) und einem Rotor (3), wobei aus Phasenspannungen und/oder Phasenströmen der Synchronmaschine (2) eine Ermittlung von Spannungen (Ud, Uq, Udm, Uqm) und Strömen (Id, Iq, Idm, Iqm) eines rotorfesten Koordinatensystems (d-q- bzw. dm-qm-System) erfolgt und eine Winkelgeschwindigkeit ($\omega$) des Rotors (3) sowie die ermittelten Spannungen (Ud, Uq, Udm, Uqm) und Ströme (Id, Iq, Idm, Iqm) zur Bestimmung des Winkelfehlers ($\varphi$) herangezogen werden. Weiterhin betrifft die Erfindung eine korrespondierende Vorrichtung zum Ermitteln eines Winkelfehlers ($\varphi$) und ein Kraftfahrzeugsystem.

Fig. 3

EP 3 026 811 A1

**Beschreibung**

Die vorliegende Erfindung betrifft ein Verfahren zum Ermitteln eines Winkelfehlers in einer elektronisch kommutierten Synchronmaschine gemäß Oberbegriff von Anspruch 1, eine korrespondierende Vorrichtung sowie ein Kraftfahrzeugsystem.

Elektronisch kommutierte permanenterregte Synchronmaschinen, auch als bürstenlose Motoren bekannt, weisen einen Stator mit mindestens zwei, insbesondere drei, Phasenwicklungen und einen Rotor mit mindestens einem senkrecht zur Drehachse angeordneten Polpaar auf, welches durch einen oder mehrere in oder auf dem Rotor angeordnete Permanentmagnete gebildet wird. Ein bürstenloser Motor wird über eine Ansteuerschaltung mit Strom versorgt, bei der jeder Phasenwicklung ein oberer und ein unterer Schalter zugeordnet sind, welche diese mit einer oberen bzw. einer unteren Versorgungsspannung beaufschlagen können. Wenn eine oder mehrere Phasenwicklungen bestromt werden, so richtet sich der Rotor im entstehenden Magnetfeld aus. Für eine gezielte Ansteuerung muss die Rotorposition ermittelt werden, was beispielsweise mittels eines Resolvers oder Drehencoders erfolgt.

Zweckmäßigerweise kann eine Regelung der Ströme durch die Phasenwicklungen in einem rotorfesten Koordinatensystem realisiert werden, wobei eine d-Achse und eine um 90° (elektrischer Winkel, über die Polpaarzahl mit dem mechanischen Winkel verknüpft) zu dieser stehende q-Achse betrachtet werden. Eine Berechnung der Werte im d-q-Koordinatensystem erfolgt dabei häufig mittels Clarke-Parke-Transformation aus dem dreiphasigen Statorbezugssystem. Ein in q-Achsen-Richtung eingeprägter Strom bestimmt (in einem Motor ohne Reluktanzmoment) das abgegebene Drehmoment und wird daher als drehmomentbildender Strom ($i_q$) bezeichnet. Die magnetische Flussdichte des Rotormagnetfelds wird mittels des Betrags des Vektors in Richtung der d-Achse abbildet. Zur Erzielung hoher Drehzahlen kann eine Feldschwächungsregelung erfolgen, in der auch ein in d-Achsen-Richtung fließender Strom vorgegeben wird, wodurch der magnetische Fluss der Erregerwicklung verringert und die Drehzahl erhöht wird. Das rotorfeste Koordinatensystem rotiert gegenüber dem Stator, weshalb die anzulegenden Phasenströme bzw. entsprechende Phasenspannungen über eine geeignete Transformation anhand der Rotorposition ermittelt werden. Auch über alternative Verfahren wie z.B. eine Steuerung mit Hilfe von in einer Tabelle abgelegten Werten können Phasenspannungen vorgegeben werden. Gemäß der ermittelten Phasenspannungen werden in einer Pulsweitenmodulation (PWM), wie insbesondere einer Raumzeigermodulation, periodisch Ansteuerungsgrade sowie diesen entsprechende Zeitdauern ermittelt, während denen die jeweilige Phasenwicklung durch die Ansteuerschaltung mit der oberen oder der Versorgungsspannung verbunden werden.

Um die elektronische Kommutierung der Maschine zeitlich korrekt vorgeben und eine feldorientierte Regelung realisieren zu können, ist eine ausreichend genaue Kenntnis der Rotorposition der elektrischen Maschine notwendig, damit erforderliche Koordinatentransformationen gemessener Größen ausgeführt werden können. Zur Berechnung der Rotorposition wird in an sich bekannter Weise ein Offsetwinkel hinterlegter, welcher eine Abweichung einer tatsächlichen Nulllage der Maschine von einer Nulllage des für die Maschine vorgesehenen Winkelsensorsystems abbildet. Die Rotorposition wird aus unterschiedlichen Gründen dennoch nicht immer korrekt erfasst. Dies kann zum Beispiel durch eine nicht korrekte Definition während eines Ausrichtungsprozesses mit den zur Erfassung der Rotorposition vorgesehenen Sensoren oder durch weitere als solches bis dahin nicht berücksichtigte mechanische und/oder unkorrekte elektrische Abweichungen ausgelöst sein. Diese bezogen auf die tatsächliche Rotorposition vorliegende Positions- bzw. Winkelabweichung, im Weiteren Winkelfehler genannt, sollte im Betrieb der Maschine berücksichtigt werden. Im Falle einer unzureichenden genauen Kenntnis über die Rotorposition kann möglicherweise keine stabile Regelung erfolgen, was unter Umständen erhebliche negative Konsequenzen nach sich ziehen kann. Damit Fehler schnellstmöglich erkannt und entsprechende Maßnahmen ergriffen werden können, wird der Winkelfehler häufig mittels einer Drehzahl- und Drehrichtungsüberwachung unter Verwendung eines entsprechenden Drehzahlsensors erfasst. Im Falle eines Winkelfehlers erzeugt ein feldschwächender Strom aufgrund seines vektoriellen Anteils in Richtung der q-Achse ebenfalls ein Drehmoment. Geringe Winkelfehler von beispielsweise 10° bis 20° elektrischer Winkel können mit dieser Vorgehensweise jedoch lediglich bei vergleichsweise hohen Drehzahlen erfasst werden, da erst ein ausreichend hoher feldschwächender Strom bei Vorhandensein eines Winkelfehlers ein detektierbares Drehmoment erzeugt.

Die DE 10 2012 201 319 A1 beschreibt ein Verfahren zum Ermitteln eines Offsetwinkels in einer Elektromaschine, bei welchem die Elektromaschine derart in einen Quasi-Nullstrom-Zustand angesteuert wird, dass im Wesentlichen kein Strom in den Wicklungen der Elektromaschine fließt. Anschließend erfolgt das Bestimmen eines Spannungszeigers, der eine Richtung einer angesteuerten Spannung angibt, das Transformieren des Spannungszeigers in ein rotorfestes Koordinatensystem und das Bestimmen des Offsetwinkels basierend auf dem transformierten Spannungszeiger, wobei ein Winkelfehler des Offsetwinkels aus der d-Komponente und der q-Komponente durch Bilden eines Arkustangenswertes berechnet wird.

Aus der DE 10 2004 009 638 A1 geht ein Drehpositionsabweichungskorrekturverfahren zur Korrektur einer Abweichung zwischen einer erfassten und einer tatsächlichen Rotorposition eines Synchronmotors hervor. Dabei erfolgt ein Aussetzen einer Drehmomentanweisung, um eine d-Achsenstrominstruktion und eine q-Achsenstrominstruktion zu Null zu setzen und ein Beurteilen, ob die bestimmte d-Achsenspannungsinstruktion Null ist oder nicht. Wenn die d-Achsenspannungsinstruktion nicht Null ist, wird ein Winkelfehler bestimmt, bei der die d-Achsenspannungsinstruktion zu Null wird und der solchermaßen erhaltene Winkelfehler wird anschließend für die Motorregelung herangezogen.

Bei denen in der DE 10 2012 201 319 A1 und DE 10 2004 009 638 A1 beschriebenen Verfahren ist zur Bestimmung des Winkelfehlers eine Aussetzung einer Drehmomentanweisung bzw. Regeln der Ströme in den Wicklungen der elektrischen Maschine in einen Quasi-Nullstrom-Zustand notwendig, wobei während dieser Zeit keine Motorregelung im Sinne der eigentlichen Verwendung der Maschine erfolgen kann.

Aufgabe der Erfindung ist es daher, ein Verfahren und eine Vorrichtung zum Betreiben einer elektronisch kommutierten Maschine bereitzustellen, mittels welchem eine Bestimmung eines Winkelfehlers während des anwendungsbezogenen laufenden Betriebs der Maschine erfolgen kann.

Diese Aufgabe wird durch ein Verfahren gemäß Anspruch 1 und eine Vorrichtung gemäß Anspruch 6 gelöst.

Die Erfindung beschreibt ein Verfahren zum Ermitteln eines Winkelfehlers in einer elektronisch kommutierten Synchronmaschine mit einem Stator und einem Rotor, wobei aus Phasenspannungen und/oder Phasenströmen der Synchronmaschine eine Ermittlung von Spannungen und Strömen eines rotorfesten Koordinatensystems erfolgt und eine Winkelgeschwindigkeit des Rotors sowie die ermittelten Spannungen und Ströme zur Bestimmung des Winkelfehlers herangezogen werden.

In vorteilhafter Weise können somit die ohnehin für die Maschinenregelung erfassten Spannungen und Ströme zur Bestimmung des Winkelfehlers genutzt werden, wodurch eine Echtzeitüberwachung erzielt werden kann und die auf die eigentliche Verwendung der Maschine ausgerichtet Stromregelung braucht nicht unterbrochen werden.

Gemäß einer bevorzugten Ausführungsform der Erfindung wird der Winkelfehler durch Bilden eines Arkustangenswerts aus einer d-Komponente und einer q-Komponente eines eine elektromotorischen Kraft der Maschine repräsentierenden Spannungsraumzeigers berechnet, wobei zur Berechnung der d-Komponente und der q-Komponente jeweils die Winkelgeschwindigkeit des Rotors sowie die ermittelten Spannungen und Ströme des rotorfesten Koordinatensystems herangezogen werden. Zum Erhalt der d-Komponente und der q-Komponente des die elektromotorische Kraft der Maschine repräsentierenden Spannungsraumzeigers wird ein jeweils inhärenter Anteil des Spannungsraumzeigers aus den ermittelten Spannungen des rotorfesten Koordinatensystems bestimmt. Entsprechend einer bevorzugten Ausführungsform sind die d-Komponente und die q-Komponente des Spannungsraumzeigers der elektromotorischen Kraft jeweils Ergebnis einer Differenz, welche aus der entsprechenden ermittelten Spannung des rotorfesten Koordinatensystems und unter Hinzuziehung der ermittelten Winkelgeschwindigkeit und der ermittelten Ströme des rotorfesten Koordinatensystems berechnet wird. Im Unterschied zu einer direkten Messung der durch die elektromagnetische Kraft induzierten Spannung muss unter Verwendung des erfindungsgemäßen Verfahrens die Regelung der Synchronmaschine zweckmäßigerweise nicht unterbrochen werden, noch muss beispielsweise Lastfreiheit oder Quasi-Nullstrom-Zustand der Maschine vorliegen.

Der Winkelfehler wird besonders bevorzugt während eines anwendungsbezogenen laufenden Betriebs der Synchronmaschine ermittelt. Durch die Berücksichtigung des Winkelfehlers bei der Stromregelung wird in vorteilhafter Weise eine Vermeidung instabilen Maschinenverhaltens ermöglicht.

Der Winkelfehler wird vorzugsweise mit dem gemessenen Rotorpositionswinkel verrechnet, wobei ein bereits hinterlegter Offsetwinkel, welcher eine Abweichung einer tatsächlichen Nulllage der Maschine von einer Nulllage eines für die Maschine vorgesehenen Winkelsensorsystems abbildet, bevorzugt ebenfalls Berücksichtigung findet.

Die Erfindung betrifft zudem eine Vorrichtung zum Ermitteln eines Winkelfehlers in einer elektronisch kommutierten Synchronmaschine mit einem Stator und einem Rotor, wobei die Vorrichtung Mittel zur Erfassung einer Winkelgeschwindigkeit des Rotors und von Phasenspannungen und/oder Phasenströmen der Synchronmaschine aufweist und ausgestaltet ist, das erfindungsgemäße Verfahren auszuführen.

Weiterhin betrifft die Erfindung ein Kraftfahrzeugsystem, insbesondere ein Kraftfahrzeugbremssystem, mit einer erfindungsgemäßen Vorrichtung.

Weitere bevorzugte Ausführungsformen ergeben sich aus der nachfolgenden Beschreibung an Hand von Figuren.

Es zeigt:

Fig. 1   einen bürstenlosen Motor mit Ansteuerschaltung,

Fig. 2   ein für eine Vektorregelung herangezogenes d-q-Koordinatensystem und ein um einen Winkelfehler φ verdrehtes dm-qm-Koordinatensystem und

Fig. 3   ein Blockschaltbild einer beispielsgemäßen Stromregelung für einen bürstenlosen Motor mit Ansteuerschaltung gemäß Fig. 1 und 2.

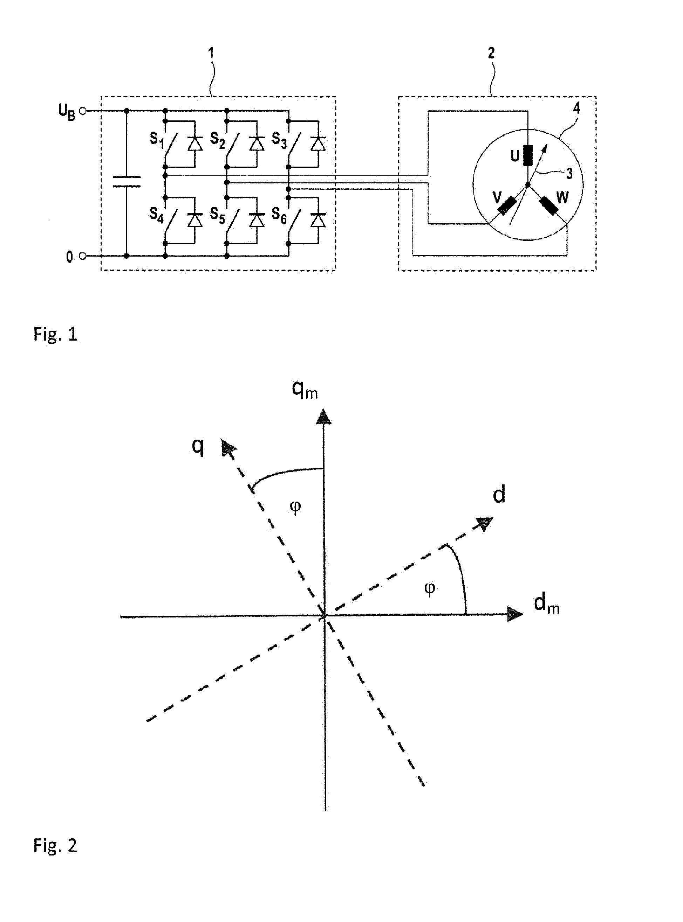

In Figur 1 ist eine beispielgemäße elektrische Maschine 2 dargestellt, die über eine Ansteuerschaltung 1 mit Energie versorgt wird. Der Stator 4 der elektrischen Maschine 2 umfasst im gezeigten Beispiel drei Phasenwicklungen U, V und W, welche sternförmig verschaltet sind und über zugeordnete Schalter mit einer oberen Versorgungsspannung $U_B$ oder einer unteren Versorgungsspannung 0 (bzw. Masse) verbunden werden können. Der schematisch angedeutete Rotor 3 umfasst mindestens ein Polpaar, welches mittels Permanentmagneten realisiert ist. Nicht gezeigt sind ein Rotorpositionssensor und ein Steuergerät, welches insbesondere einen Mikroprozessor umfasst, der die Schalter ansteuert.

Die Phasenwicklung U kann über Schalter $S_1$ mit der oberen Versorgungsspannung und über Schalter $S_4$ mit Masse verbunden werden. Entsprechend sind der Phasenwicklung V die Schalter $S_2$ und $S_5$ sowie der Phasenwicklung W die Schalter $S_3$ und $S_6$ zugeordnet. Die Schalter können vorzugsweise als Feldeffekttransistoren (FET) realisiert sein und auch eine parallel geschaltete Diode aufweisen, wie dies in der Figur 1 dargestellt ist. Für die Ansteuerung ist es zweckmäßig, wenn jede Phasenwicklung (bzw. die zugehörigen Schalter) ein Strommesselement (nicht dargestellt) aufweist, da dann unabhängig vom Aussteuerungsgrad eine Messung des Stroms durch die einzelnen Phasenwicklungen möglich ist. Dies kann beispielsweise dadurch erfolgen, dass die Schalter als Sense-FETs ausgeführt sind, die an einem zusätzlichen Anschluss einen zum fließenden Schaltstrom proportionalen Messstrom abgeben, der z.B. über einen Referenzwiderstand und einen Analog-Digitalwandler bestimmt werden kann.

Die Phasenwicklungen werden über eine Raumzeigermodulation mit Strom bzw. Spannung versorgt. Vernachlässigt man Totzeiten, welche wegen des nicht idealen Verhaltens der Schalter $S_1$ bis $S_6$ erforderlich sind, so ist zu einem beliebigen Zeitpunkt bei Phasenwicklung U entweder Schalter $S_1$ geöffnet und $S_4$ geschlossen oder $S_1$ geschlossen und $S_4$ geöffnet (bei den anderen Phasenwicklungen gilt dies entsprechend für die zugeordneten Schalter). Den verschiedenen Schaltzuständen der Ansteuerschaltung ist jeweils ein Basisvektor zugeordnet, wobei 6 aktive Basisvektoren einen Stromfluss durch mindestens eine Phasenwicklung bewirken und 2 Schaltzustände Nullvektoren entsprechen. Bei dem ersten Nullvektor sind für jede Phasenwicklung die Schalter zur Verbindung mit der oberen Versorgungsspannung geschlossen, so dass keine Spannung anliegt; bei dem zweiten Nullvektor gilt dies entsprechend für die Schalter zu Masse. Ein beliebiger Spannungsvektor kann bei geeigneter Wahl der Zeitdauern durch die zwei benachbarten aktiven Basisvektoren und einen oder beide Nullvektoren eingestellt werden. Nachfolgend werden die grundlegenden Überlegungen des erfindungsgemäßen Verfahrens zur Bestimmung des Winkelfehlers φ anhand von Fig. 2 erläutert. Für permanentmagneterregte Synchronmaschinen ohne wirkendes Reluktanzmoment gelten für das d-q-Koordinatensystem die Gleichungen (1) und (2):

$$Ud = R \cdot Id + L \cdot dId/dt - \omega \cdot L \cdot Iq \qquad (1)$$

$$Uq = R \cdot Iq + L \cdot dIq/dt + \omega \cdot L \cdot Id + \omega \cdot \Psi_{PM} \qquad (2)$$

mit

| | |
|---|---|
| Ud,Uq | Spannungen im d-q-Koordinatensystem |
| Id,Iq | Ströme im d-q-Koordinatensystem |
| R | Wicklungswiderstand |
| L | Wicklungsinduktivität |
| ω | Winkelgeschwindigkeit |
| $\Psi_{PM}$ | Flusskonstante, insbesondere abhängig von der Remanenzinduktion der Permanentmagnete und den konstruktiven Beschaffenheiten der Maschine |

Im Falle eines Winkelfehlers φ - also eines systematischen Fehlers bei der Bestimmung der Position des Rotors 3 - sind die Ströme Id, Iq und Spannungen Ud, Uq des d-q-Koordinatensystems von Rotor 3 nicht bekannt. Lediglich die Ströme Idm,Iqm und Spannungen Udm,Uqm des um den Winkelfehler φ verdrehten dm-qm-Koordinatensystems werden gemessen.

$$Udm = Ud \cdot \cos(\varphi) - Uq \cdot \sin(\varphi) \qquad (3)$$

$$Uqm = Ud \cdot \sin(\varphi) + Uq \cdot \cos(\varphi) \qquad (4)$$

$$Idm = Id \cdot \cos(\varphi) - Iq \cdot \sin(\varphi) \qquad (5)$$

$$Iqm = Id \cdot \sin(\varphi) + Iq \cdot \cos(\varphi) \qquad (6)$$

Für einen gegen Null gehenden Winkelfehler gilt entsprechend Ud = Udm, Uq = Uqm, Id = Idm und Iq = Iqm. Unter Berücksichtigung der Gleichungen (1) und (2) erhält man durch Einsetzen in die Gleichungen (3) und (4) die Ausdrücke (7) und (8):

$$Udm = R \cdot Id \cdot \cos(\varphi) + L \cdot dId/dt \cdot \cos(\varphi) - \omega \cdot L \cdot Iq \cdot \cos(\varphi) - R \cdot Iq \cdot \sin(\varphi)$$
$$- L \cdot dIq/dt \cdot \sin(\varphi) + \omega \cdot L \cdot Id \cdot \sin(\varphi) - \omega \cdot \Psi_{PM} \cdot \sin(\varphi) \qquad (7)$$

$$Uqm = R \cdot Id \cdot \sin(\varphi) + L \cdot dId/dt \cdot \sin(\varphi) - \omega \cdot L \cdot Iq \cdot \sin(\varphi) + R \cdot Iq \cdot \cos(\varphi)$$
$$+ L \cdot dIq/dt \cdot \cos(\varphi) + \omega \cdot L \cdot Id \cdot \cos(\varphi) + \omega \cdot \Psi_{PM} \cdot \cos(\varphi) \qquad (8)$$

Die Gleichungen (7) und (8) können unter Berücksichtigung der Gleichungen (3) bis (6) zu Gleichungen (9) und (10) vereinfacht werden:

$$Udm = R \cdot Idm + L \cdot dIdm/dt - \omega \cdot L \cdot Iqm - \omega \cdot \Psi_{PM} \cdot \sin(\varphi) \qquad (9)$$

$$Uqm = R \cdot Iqm + L \cdot dIqm/dt + \omega \cdot L \cdot Idm + \omega \cdot \Psi_{PM} \cdot \cos(\varphi) \qquad (10)$$

wobei die Terme $\omega \cdot \Psi_{PM} \cdot \sin(\varphi)$ und $\omega \cdot \Psi_{PM} \cdot \cos(\varphi)$ die aus der elektromotorischen Kraft (BEMF) der Maschine resultierenden Spannungen repräsentieren:

$$Ud\_BEMF = - \omega \cdot \Psi_{PM} \cdot \sin(\varphi) = Udm - Ud\_calc \qquad (11)$$

$$Uq\_BEMF = \omega \cdot \Psi_{PM} \cdot \cos(\varphi) = Uqm - Uq\_calc \qquad (12)$$

mit

$$Ud\_calc = R \cdot Idm + L \cdot dIdm/dt - \omega \cdot L \cdot Iqm \qquad (13)$$

$$Uq\_calc = R \cdot Iqm + L \cdot dIqm/dt + \omega \cdot L \cdot Idm \qquad (14)$$

Aus dem Verhältnis der d- und q-Komponente des durch die elektromotorische Kraft der Maschine hervorgerufenen Spannungsraumzeigers:

```
Ud_BEMF/Uq_BEMF = - ω·Ψ_PM·sin(φ)/(ω·Ψ_PM·cos(φ))
```

$$= - (Udm - Ud\_calc)/(Uqm - Uq\_calc) = \tan(\varphi) \quad (15)$$

kann auf Basis der gemessenen Stromwerte Idm, Iqm, Spannungswerte Udm, Uqm sowie Winkelgeschwindigkeit ω der Winkelfehler φ bestimmt werden:

$$\varphi = - \arctan\{(Udm - Ud\_calc)/(Uqm - Uq\_calc)\} \quad (16)$$

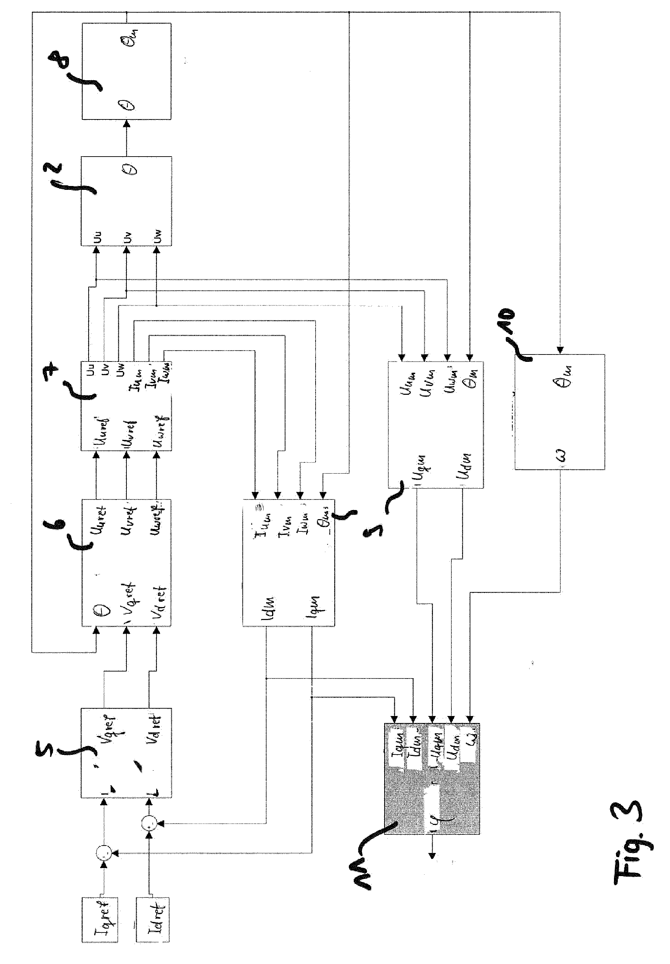

Fig. 3 zeigt ein Blockschaltbild einer beispielsgemäßen Stromregelung für einen bürstenlosen Motor mit Ansteuerschaltung gemäß Fig. 1 und 2. Iqref und Idref bilden die Vorgabe- bzw. Sollwerte der Regelung, wobei die Regeldifferenzen aus den Vorgabewerten Iqref, Idref und Messwerten Idm, Iqm Stromregler 5 zugeführt werden. Aus den von Stromregler 5 berechneten Sollwerten Vqref und Vdref des d-q-Systems werden unter Hinzuziehung des beispielsweise unter Verwendung wenigstens eines Hallsensors 8 gemessenen Rotorwinkels $\theta_m$ die Sollwerte der Phasenspannungen Uuref, Uvref, Uwref von Maschine 2 mittels inverser Clarke Transformation 6 ermittelt und Umrichter 7 bereitgestellt, welcher mittels Ansteuerschaltung 1 (Fig. 1) Maschine 2 versorgt. Die gemessenen Phasenspannungen $Uu_m$, $Uv_m$, $Uw_m$ und die gemessenen Phasenströme $Iu_m$, $Iv_m$, $Iw_m$ werden jeweils unter Hinzunahme des gemessenen Rotorwinkels $\theta_m$ mittels

Clark-Parks Transformation 9 in das dm-qm-System überführt. Die erhaltenen Werte für Idm und Iqm werden einerseits zur Berechnung der eingangs genannten Regeldifferenzen rückgeführt und weiterhin, wie ebenfalls die Werte Uqm, Udm und die aus dem gemessenen Rotorwinkel $\theta_m$ berechnete Winkelgeschwindigkeit ω (Ableitung), der Kommutierungsüberwachung 11 bereitgestellt, woraus unter Verwendung von Gleichung (16) Winkelfehler φ berechnet wird.

Ein bevorzugtes Ausführungsbeispiel des erfindungsgemäßen Verfahrens umfasst somit die Schritte:

1. Bestimmung der Spannungen Udm, Uqm und Ströme Idm, Iqm des rotorfesten Koordinatensystems aus den gemessenen und/oder berechneten Phasenspannungen $Uu_m$, $Uv_m$, $Uw_m$ und/oder Phasenströmen $Iu_m$, $Iv_m$, $Iw_m$ und

2. Berechnung des Winkelfehlers φ anhand von Gleichung (16) mit den Gleichungen (13) und (14) unter Heranziehung der gemessenen Ströme Idm, Iqm, Spannungen Udm, Uqm und Winkelgeschwindigkeit ω.

Die sowieso für die Regelung der Maschine 2 erfassten Spannungen und Ströme werden somit zur Bestimmung des Winkelfehlers φ genutzt, wodurch bei Heranziehung für die Regelung der Maschine insbesondere eine Vermeidung instabiler Regelungs- bzw. Maschinenzustände ermöglicht wird. Der Winkelfehler φ kann dabei beispielsweise mit dem gemessenen Rotorpositionswinkel verrechnet werden (z.B. Addition, Subtraktion), wobei ein bereits hinterlegter Offsetwinkel, welcher eine Abweichung einer tatsächlichen Nulllage der Maschine von einer Nulllage des für die Maschine vorgesehenen Winkelsensorsystems 8 abbildet, bevorzugt ebenfalls Berücksichtigung findet.

**Patentansprüche**

1. Verfahren zum Ermitteln eines Winkelfehlers (φ) in einer elektronisch kommutierten Synchronmaschine (2) mit einem Stator (4) und einem Rotor (3), wobei aus Phasenspannungen und/oder Phasenströmen der Synchronmaschine (2) eine Ermittlung von Spannungen (Ud, Uq, Udm, Uqm) und Strömen (Id, Iq, Idm, Iqm) eines rotorfesten Koordinatensystems (d-q-bzw. dm-qm-System) erfolgt, **dadurch gekennzeichnet, dass** eine Winkelgeschwindigkeit (ω) des Rotors (3) sowie die ermittelten Spannungen (Ud, Uq, Udm, Uqm) und Ströme (Id, Iq, Idm, Iqm) zur Bestimmung des Winkelfehlers (φ) herangezogen werden.

2. Verfahren gemäß Anspruch 1, **dadurch gekennzeichnet, dass** der Winkelfehler (φ) durch Bilden eines Arkustangenswerts aus einer d-Komponente und einer q-Komponente eines eine elektromotorischen Kraft der Maschine repräsentierenden Spannungsraumzeigers berechnet wird, wobei zur Berechnung der d-Komponente und der q-Komponente jeweils die Winkelgeschwindigkeit ($\omega$) des Rotors (3) sowie die ermittelten Spannungen (Ud, Uq, Udm, Uqm) und Ströme (Id, Iq, Idm, Iqm) des rotorfesten Koordinatensystems (d-q- bzw. dm-qm-System) herangezogen werden.

3. Verfahren gemäß Anspruch 1 oder 2, **dadurch gekennzeichnet, dass** zum Erhalt der d-Komponente und der q-Komponente des die elektromotorische Kraft der Maschine repräsentierenden Spannungsraumzeigers ein jeweils inhärenter Anteil des Spannungsraumzeigers aus den ermittelten Spannungen (Ud, Uq, Udm, Uqm) des rotorfesten Koordinatensystems (d-q- bzw. dm-qm-System) bestimmt wird.

4. Verfahren gemäß Anspruch 2 oder 3, **dadurch gekennzeichnet, dass** die d-Komponente und die q-Komponente des Spannungsraumzeigers der elektromotorischen Kraft jeweils Ergebnis einer Differenz sind, welche aus der entsprechenden ermittelten Spannung (Ud, Uq, Udm, Uqm) des rotorfesten Koordinatensystems (d-q- bzw. dm-qm-System) und unter Hinzuziehung der ermittelten Winkelgeschwindigkeit ($\omega$) und der ermittelten Ströme (Id, Iq, Idm, Iqm) des rotorfesten Koordinatensystems (d-q- bzw. dm-qm-System) erhaltener Werte berechnet wird.

5. Verfahren gemäß einem der Ansprüche 1 bis 4, **dadurch gekennzeichnet, dass** der Winkelfehler ($\varphi$) während eines anwendungsbezogenen laufenden Betriebs der Synchronmaschine (2) ermittelt wird.

6. Vorrichtung zum Ermitteln eines Winkelfehlers ($\varphi$) in einer elektronisch kommutierten Synchronmaschine (2) mit einem Stator (4) und einem Rotor (3), wobei die Vorrichtung Mittel zur Erfassung einer Winkelgeschwindigkeit ($\omega$) des Rotors (3) und von Phasenspannungen und/oder Phasenströmen der Synchronmaschine (2) aufweist und ausgestaltet ist, das Verfahren gemäß einem der Ansprüche 1 bis 5 auszuführen.

7. Kraftfahrzeugsystem, insbesondere ein Kraftfahrzeugbremssystem, mit einer Vorrichtung gemäß Anspruch 6.

Fig. 1

Fig. 2

Fig. 3

Europäisches
Patentamt

European
Patent Office

Office européen
des brevets

**EUROPÄISCHER RECHERCHENBERICHT**

Nummer der Anmeldung

EP 14 46 5525

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SAKAMOTO K ET AL: "Position and speed sensorless control for PMSM drive using direct position error estimation", IECON'01. PROCEEDINGS OF THE 27TH. ANNUAL CONFERENCE OF THE IEEE INDUSTRIAL ELECTRONICS SOCIETY. DENVER, CO, NOV. 29 - DEC. 2, 2001; [ANNUAL CONFERENCE OF THE IEEE INDUSTRIAL ELECTRONICS SOCIETY], NEW YORK, NY : IEEE, US, Bd. 3, 29. November 2001 (2001-11-29), Seiten 1680-1685, XP010571665, DOI: 10.1109/IECON.2001.975540 ISBN: 978-0-7803-7108-8 | 1-6 | INV. H02P21/14 |
| A | * das ganze Dokument * ----- | 7 | |
| A | DE 10 2013 004954 A1 (AUDI AG [DE]) 25. September 2014 (2014-09-25) * das ganze Dokument * ----- | 1-7 | |
| Y | EP 2 770 626 A1 (MITSUBISHI HEAVY IND LTD [JP]) 27. August 2014 (2014-08-27) | 1 | |
| A | * das ganze Dokument * ----- | 2-7 | RECHERCHIERTE SACHGEBIETE (IPC) |
| Y | EP 2 770 627 A1 (MITSUBISHI HEAVY IND LTD [JP]) 27. August 2014 (2014-08-27) | 1 | H02P |
| A | * das ganze Dokument * ----- | 2-7 | |

Der vorliegende Recherchenbericht wurde für alle Patentansprüche erstellt

| Recherchenort | Abschlußdatum der Recherche | Prüfer |
|---|---|---|
| München | 28. April 2015 | Schneider, Gernot |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 46 5525

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-04-2015

| Im Recherchenbericht angeführtes Patentdokument | Datum der Veröffentlichung | Mitglied(er) der Patentfamilie | Datum der Veröffentlichung |
|---|---|---|---|
| DE 102013004954 A1 | 25-09-2014 | DE 102013004954 A1<br>WO 2014146772 A2 | 25-09-2014<br>25-09-2014 |
| EP 2770626 A1 | 27-08-2014 | CN 103999349 A<br>EP 2770626 A1<br>JP 2013090546 A<br>US 2014285125 A1<br>WO 2013058122 A1 | 20-08-2014<br>27-08-2014<br>13-05-2013<br>25-09-2014<br>25-04-2013 |
| EP 2770627 A1 | 27-08-2014 | CN 103875175 A<br>EP 2770627 A1<br>JP 2013090545 A<br>US 2014346983 A1<br>WO 2013058109 A1 | 18-06-2014<br>27-08-2014<br>13-05-2013<br>27-11-2014<br>25-04-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012201319 A1
- DE 102004009638 A1